# EUROPEAN PATENT APPLICATION

(11) **EP 4 844 572 A1**
(43) Date of publication of application: **25.11.2026**
(21) Application number: 26179031.5
(22) Date of filing: 15.05.2026
(51) Int. Cl.: G06F 8/33, G06F 8/36, G06F 8/38, G06F 8/34, G06F 40/10, G06F 40/30, G06N 3/0475

(54) **GENERATION AND MODIFICATION OF SOFTWARE APPLICATIONS WITH GENERATIVE MODEL CAPABILITIES**

(30) Priority: 19.05.2025 US 202563808268 P; 07.08.2025 US 202519294086
(71) Applicant: GDM Holding LLC, Mountain View CA 94043 (US)
(72) Inventor: DEVAGI, Pramodh Ankit, San Jose (US); RATHINAM, Saravana, Menlo Park (US); NAIR, Arjun, Mountain View (US); OLLARVEZ, Andres, Madison (US); BETTRIDGE, Robert, San Mateo (US); PUNJABI, Jitesh Vinod, Lachen (CH); RAJAMANI, Aishwarya, San Jose (US); YAN, Xinyu, Sunnyvale (US); XIONG, Song, Sunnyvale (US); GARG, Ankur, Redwood City (US); ZHANG, Chenyu, Santa Clara (US); SHAH, Krunal, Kirkland (US); ROBERT, Derik Clive, Mountain View (US); LIU, Mingjie, Milpitas (US); GUPTA, Sonal, Sunnyvale (US); COIMBRA, Adam, Los Altos (US); DUNAYEV, Alexei, Seattle (US); SEEBORN, Troy, Seattle (US); DAPOT, Ian, San Francisco (US); DAS, Animesh, San Francisco (US)
(74) Representative: Chettle, John Edward

(57) **Abstract**

Implementations disclosed herein are directed to generating software application(s) and modifying the software application(s) with generative model capabilities. Processor(s) of a system can: receive an indication of user input to generate a software application; process the user input to generate corresponding code for the software application; cause a user interface to be rendered via a display of a client device of a user, the user interface including at least the corresponding code for the software application; receive an indication of additional user input to modify the software application with generative model capabilities; process the corresponding code for the software application to generate corresponding modified code for the software application that includes the generative model capabilities; and cause the user interface to be updated to include at least the corresponding modified code for the software application.

## Description

### Background

Various generative models have been proposed that can be used to process natural language (NL) content and/or other input(s) (e.g., image(s) that accompany NL content), to generate output that reflects generative content (e.g., NL content, image(s)) that is responsive to the input(s). For example, large language models (LLM(s)) have been developed that can be used to process NL content and/or other input(s), to generate LLM output that reflects NL content and/or other content that is responsive to the input(s). For instance, an LLM can be used to process NL content from a user of "generate a software application that can help me recognize different flowering plants", to generate LLM output. The LLM output can reflect, for example, generative code for a software application that includes a quiz of different flowering plants to help the user learn what different flowering plants look like, that includes a summary of different species of flowering plants and how to recognize them or differentiate them from one another, and/or that otherwise helps the user recognize different flowering plants. The LLM output can be generated, for example, based on intrinsic learned parameters of the LLM itself and/or based on information obtained from one or more external source(s) and processed, along with the NL content and using the LLM, in generating the LLM output.

However, current utilizations of generative models suffer from one or more drawbacks. For example, in the example of the previous paragraph the LLM output can result in the generative code that the user can export the generative code into a different application environment external to the LLM to compile and run the code. In this example, if the user wishes to make any changes to the generative code, such as to various user interface elements, to various capabilities of the software application, etc., the user has to leave the different application environment and return to interacting with the LLM to modify the software application and then re-export, re-compile, and re-run the code, thereby prolonging the human-to-computer interaction between the user and the LLM and wasting computational and/or network resources.

Additionally, or alternatively, the generative code could include, for instance, compiling errors that the user may not be aware of until the user tries to compile and run the generative code in the different application environment. As a result, the user may return to interacting with the LLM to correct these compiling errors through additional interactions with the LLM, thereby prolonging the human-to-computer interaction between the user and the LLM and wasting computational and/or network resources. Further, these drawbacks can be exacerbated in instances where the user has no/little coding experience and the generative code requires the user to define application programming interface (API) calls and/or API keys to enable the software application to interact with component(s) of a client device, interact with generative models, etc.

### Summary

Implementations disclosed herein are directed to generating software application(s) and modifying the software application(s) with generative model capabilities. For example, processor(s) of a system can receive, via a client device of a user, an indication of user input to generate a software application, process the user input to generate corresponding code for the software application, and cause a user interface to be rendered via a display of the client device of the user. The corresponding code can include basic capabilities that are determined based on the user input (and that do not require or include invocation or interaction with a generative model), and the user interface can include at least the corresponding code for the software application. Further, the processor(s) can receive an indication of additional user input to modify the software application with generative model capabilities, process the corresponding code for the software application to generate corresponding modified code for the software application, and cause the user interface to be updated. The corresponding modified code for the software application can include the basic capabilities and the generative model capabilities, and the user interface can be updated to include at least the corresponding modified code for the software application.

Implementations disclosed herein can mitigate (e.g., eliminate) various drawbacks with current techniques. For example, the techniques described allow for modification of the software application within the same environment where the code is initially generated and viewed, thereby avoiding the need for a user to export code to a separate environment, make changes, and then re-export, re-compile, and re-run the code in the separate environment. As a result, a human-to-computer interaction between the user and a generative model utilized to generate and modify the software application can be concluded in a more quick and efficient manner, thereby conserving computational and/or network resources. For instance, in implementations where the client device of the user is a battery powered device, battery resources can be conserved by receiving fewer user inputs, by processing fewer inputs, etc. Also, for instance, in implementations where the generative model is executed remotely from the client device, network resources can be conserved by transmitting fewer user inputs to a remote system (e.g., high performance server(s)) that host the generative model.

As a non-limiting example of some implementations disclosed herein, a user could utilize a client device to interact with a generative model via a user interface rendered on a display. The user interface could initially present a single chat interface where the user provides natural language input, such as "generate a software application that can help me recognize different flowering plants. "The processor(s) can then generate corresponding HTML and JavaScript code for the software application, and cause the corresponding code to be displayed to the user, perhaps within a dedicated code pane in a dual-pane user interface that automatically appears. The basic capabilities of the corresponding code can include means for helping the user to recognize different flowering plants, such as quizzes, summaries, or other information that do not require or include invocation or interaction with a generative model. Subsequently, the user might provide additional input (e.g., natural language or otherwise), like "add a feature that lets me upload images to help with the recognition," which serves as an indication to modify the application with generative model capabilities (e.g., image processing and understanding capabilities of a generative model). In this example, the processor(s) can then process the corresponding code, and integrate one or more API calls to a generative model capable of image processing and understanding. This processing would result in corresponding modified code, which now includes both the basic information and functions and the generative model-powered image processing and understanding capabilities. The user interface would then be updated to display this modified code, allowing the user to see the integrated generative model capabilities within the application's code base.

In some implementations, the additional user input to modify the software application with generative model capabilities can be received through natural language input provided via the user interface, where this input specifies the desired generative model features. Continuing with the above example, the user might type or speak "add a feature that lets me upload images to help with the recognition." In this example, the processor(s) may only add generative model capabilities that are explicitly specified by the user. It should be understood that the natural language input can specify various processing, understanding, and/or generation capabilities for different modalities, such as text, audio, image, video, and/or code, and may be dependent on the natural language input provided by the user.

In these implementations, and in processing the corresponding code to add the generative model capabilities, the processor(s) can determine the generative model capabilities based on the natural language input. Further, the processor(s) can modify the corresponding code by adding application programming interface (API) call(s) to generative model(s). These calls are specifically chosen to implement the generative model capabilities requested through the natural language input. In some of these implementations, the natural language input may not include the specific details of the API call(s) or API key(s) for accessing the generative models. Notably, this processing can happen automatically in response to receiving the natural language input.

In additional or alternative implementations, the additional user input to modify the software application with generative model capabilities can be received through a selection of a graphical element, such as a button labeled "Add Al Features", "Enhance with Generative Model", or the like. When the graphical element is selected, the processor(s) can automatically incorporate generative model capabilities into the software application.

In these implementations, and in processing the corresponding code to add the generative model capabilities, the processor(s) can infer the generative model capabilities based on a type of the software application, default generative model capabilities, an account type of an account of the user, feedback from other users for a prior instance of the software application that was deployed or an additional software application that was deployed, and/or other factors. Continuing with the above example, the type of the software application relates to recognizing different flowering plants and native image processing and understanding capabilities of certain generative models could aid in recognizing different flowering plants and, as a result, the generative model capabilities that are added can include the native image processing and understanding capabilities of these certain generative models. Additionally, or alternatively, native audio/image/video processing and understanding capabilities may be default capabilities of certain generative models and, as a result, these generative model capabilities can be added as a default to allow the user to interact with the software application in various modalities. Additionally, or alternatively, an account type of an account of the user may only provide the user with access to a subset of, or all of, native audio/image/video processing and understanding capabilities and, as a result, these generative model capabilities can be added to allow the user to interact with the software application in various modalities. Additionally, or alternatively, feedback from other users for a prior instance of the software application that was deployed or an additional software application that was deployed that involves recognition of objects may indicate that native image processing and understanding capabilities would be desirable to aid in recognizing different flowering plants. It should be understood that the natural language input can specify various processing, understanding, and/or generation capabilities for different modalities, such as text, audio, image, video, and/or code, and may be dependent on the inferences made by the generative model.

Similar to implementations where natural language input is provided to add the generative model capabilities, in these implementations, the processor(s) can modify the corresponding code by adding application programming interface (API) call(s) to generative model(s). These calls are specifically chosen to implement the generative model capabilities that are inferred. Also similarly, in some of these implementations, the selection of the graphical element may not include the specific details of the API call(s) or API key(s) for accessing the generative models. Notably, this processing can happen automatically in response to receiving the selection of the graphical element.

In either of these implementations, or other implementations, the API call(s) or the API key(s) for accessing the generative models can be for a single generative model or for different generative models. As described herein, a generative model can be any machine learning model capable of generating generative vision data, generative audio data, generative textual data, generative code, and/or other forms of generative data. Some non-limiting examples of machine learning models that are capable of generating one or more forms of the generative data noted above include transformer-based machine learning models (e.g., encoder-decoder transformer models, encoder-only transformer models, decoder-only transformer models, etc. that employ an attention mechanism), diffusion-based machine learning models, recurrent neural network-based machine learning models, generative adversarial network-based machine learning models, sequence-to-sequence machine learning models, etc. Various machine learning models have demonstrated multimodal capabilities in that they are capable of processing inputs in various modalities (e.g., text-based inputs, vision-based inputs, audio-based inputs, code-based inputs, etc.) and generating outputs in various modalities (e.g., text-based output, vision-based outputs, audio-based generative outputs, code-based generative outputs, etc.).

Accordingly, in processing the corresponding code to add the generative model capabilities, the processor(s) can utilize the API call(s) and provide the API key(s) in a computationally efficient manner. For example, for text generation (including text summarization) capabilities, the processor(s) can make API call(s) to more computationally efficient generative models (e.g., generative models that can be executed locally on the client device of the user) that have, for instance, fewer parameters, lower latency, consume less computational resources, etc. However, for image generation capabilities, the processor(s) can make API call(s) to more computationally intensive generative models (e.g., generative models that are executed remotely from the client device of the user) that have, for instance, more parameters, higher latency, consume more computational resources, etc.

Thus, various disclosed herein can mitigate (e.g., eliminate) various drawbacks with current techniques. For example, the features related to automatically coding API call(s) to generative model(s) and providing API key(s) for those API call(s) eliminate the need for a user, particularly one with no or little coding experience, to manually define these elements within the software application code. As another example, the disclosed implementations can simplify the process of adding generative model capabilities to the software application, making it accessible to users without prior experience in integrating external APIs or managing API keys, thereby facilitating the creation of software applications with advanced functionalities.

In some implementations, the user interface described herein can be a dual-pane interface that enables the user to switch between viewing the actual code of the software application (either the initial or modified version) and seeing a functional preview of what the application looks like and how it operates. This allows for direct comparison between the code and its visual representation, all within a single unified user interface. In particular, one pane of the dual-pane interface can serve as a chat interface, allowing the user to interact using natural language. The other pane of the dual-pane can be a visual interface, where the code and/or a preview of the application is displayed. Notably, each of these panes in the dual-pane interface can be viewed or otherwise consumed by the user at the same time.

Thus, various implementations disclosed herein can mitigate (e.g., eliminate) various drawbacks with current techniques. For example, the user interface that includes at least the corresponding code for the software application, along with the capability to update the user interface to include corresponding modified code, allows for iterative refinement of the software application within a single environment, thus addressing the issue of users needing to repeatedly export, re-compile, and re-run code in separate environments. As another example, the ability to receive additional user input to modify the software application with generative model capabilities and process the corresponding code to generate corresponding modified code directly within the user interface eliminates the need for users to manually edit complex code or define intricate API call(s) and/or API key(s), overcoming the drawback of requiring significant coding experience.

In some versions of those implementations, the additional user input to add generative model capabilities can be provided as natural language within the chat interface in one pane of the dual-pane interface. Continuing with the above example, the additional user input can be typed or spoken input of "add a feature that lets me upload images to help with the recognition" in the chat interface of the dual-pane interface. Additionally, or alternatively, the additional input can be the selection of a graphical element, such as a button or icon, displayed within the visual interface of the dual-pane interface, which when selected, adds the desired generative model capabilities.

In additional or alternative versions of those implementations, as the corresponding code for the software application is being generated, the processor(s) can cause the corresponding code to be rendered in the visual interface in a visually streaming manner, allowing the user to see the code being generated in real-time. In some versions of those implementations, the processor(s) can cause the visual interface to automatically transition from rendering the code in the visually streaming manner to the preview of the software application, such as when visual aspects of the software application have been fully generated which can occur prior to completion of the corresponding code or upon completion of the corresponding code. Continuing with the above example, the processor(s) can cause the corresponding code for the software application to be rendered in a streaming manner as it is being generated line-by-line in the visual interface, and the processor(s) can optionally cause "thinking" of the generative model to be rendered in the chat interface. However, as soon as the code for the graphical user interface (GUI) of the software application is generated and/or after the code is completed, the processor(s) can cause the visual interface to automatically transition from rendering the code line-by-line to rendering a preview of the GUI for the software application.

In additional or alternative versions of those implementations, the user input to generate the software application can be a single chat interface (e.g., without a separate visual interface). However, and in response to receiving the user input to generate the software application, the processor(s) can automatically transition from the single chat interface to the dual-pane interface described herein. Continuing with the above example, the processor(s) can determine that the user input includes a request to generate the software application and, in response, automatically transition from the single chat interface to the dual-pane interface.

In some implementations, the software application that is generated can be a progressive web application (PWA), meaning it can function like a native application but is accessed through a web browser. In such cases, the corresponding code generated and modified can be based on standard web languages like HTML or JavaScript. Continuing with the above example, the flowering plant recognition software application can be shared by creating a shareable uniform resource locator (URL) to the PWA. In additional or alternative implementations, the software application that is generated can be a shareable and downloadable software application that can be added to, for instance, a home screen of a client device such as a home screen of a laptop or mobile device of the user and/or other user(s).

In some implementations, and subsequent to the software application being generated, the processor(s) can deploy the software application for utilization by the user and/or other users. This can involve deploying the application to a server or service where it can be accessed, which can also share the corresponding code and/or the corresponding modified code. The software application can be, for example, a static instance of the corresponding code and/or the corresponding modified code which can be downloaded by the user and/or the other users to further modify or otherwise iterate upon the software application.

In some versions of those implementations, the processor(s) can compile the corresponding modified code to determine whether it includes error(s). Further, and in response to determining that the corresponding modified code includes error(s), the processor(s) can process the corresponding modified code to correct them. After the error(s) are corrected, the processor(s) can then proceed to deploy the software application. Checking for errors can be triggered in response to the user requesting to debug the application or automatically after the modified code is generated. In some further versions of those implementations, the processor(s) may only identify and/or correct compiling errors with the corresponding modified code, but identification and/or correction of other errors are contemplated herein.

Thus, various implementations disclosed herein can mitigate (e.g., eliminate) various drawbacks with current techniques. For example, the capability to compile and automatically correct errors in the corresponding modified code in a single unified interface addresses the issue of users encountering compiling errors in separate environments, thereby conserving computational resources.

In some implementations, the processor(s) can receive an indication of further additional user input to modify the basic capabilities (and/or the generative capabilities) of the software application. In these implementations, the processor(s) can process the corresponding code for the software application (or the corresponding modified code for the software application) to generate corresponding further modified code for the software application that include the modified basic capabilities and the generative model capabilities, and cause the user interface to be updated to include the corresponding further modified code for the software application and/or a preview of the software application.

In some versions of those implementations, the further additional user input can be received via the chat interface of the dual-pane interface. In additional or alternative versions of those implementations, the further additional user input can be received by the user demarcating a portion of the preview of the software application and providing natural language input that indicates how the user would like to modify a portion of the software application. Thus, techniques described herein enable the user to modify the software application without requiring the user to directly modify any underlying code for the software application.

Continuing with the above example of the flowering plant recognition software application, an initial preview of the software application may include a dropdown box for a "flower color", the user could highlight this dropdown box, place a bounding box around this dropdown box, or otherwise demarcate a portion of the dropdown box, which can cause a prompt box to be visually rendered adjacent to the dropdown box. In the prompt box, the user can indicate how they desire to change the dropdown box, such as providing "change the options for this dropdown box to selectable boxes" and, as a result, the underlying code can be modified to change the "flower color" to selectable boxes instead of a dropdown menu, and the preview of the software application can be updated accordingly.

The above description is provided as an overview of only some implementations disclosed herein. Those implementations, and other implementations, are described in additional detail herein.

### Brief Description of the Drawings

FIG. 1 depicts a block diagram of an example environment that demonstrates various aspects of the present disclosure, and in which some implementations disclosed herein can be implemented.
FIG. 2 depicts a flowchart illustrating an example method of generating and modifying a software application with generative model capabilities, in accordance with various implementations.
FIGS. 3A, 3B, 3C, 3D, 3E, 3F, 3G, 3H, and 3I depict various non-limiting examples of generating and modifying a software application with generative model capabilities, in accordance with various implementations.
FIGS. 4A and 4B depict various non-limiting examples of interacting with a software application with generative model capabilities that were generated and modified as described with respect to FIGS. 3A, 3B, 3C, 3D, 3E, 3F, 3G, 3H, and 3I, in accordance with various implementations.
FIG. 5 depicts an example architecture of a computing device, in accordance with various implementations.

### Detailed Description

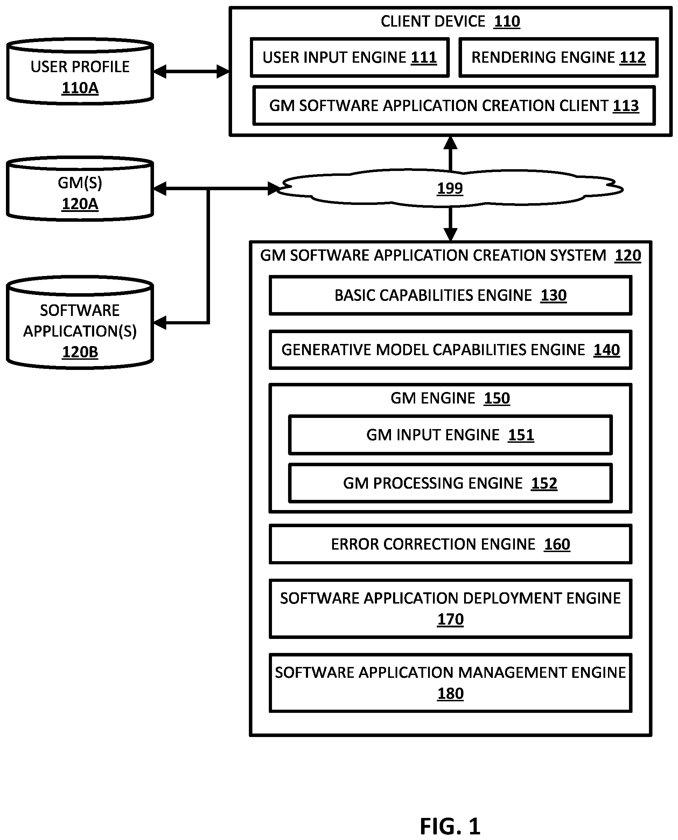

Turning now to FIG. 1, a block diagram of an example environment is depicted that demonstrates various aspects of the present disclosure and in which implementations disclosed herein can be implemented. A client device 110 is illustrated in FIG. 1. In various implementations, the client device 110 includes a user input engine 111, a rendering engine 112, and a generative model (GM) software application creation client 113. The GM software application creation client 113. The client device 110 can be, for example, one or more of: a desktop computer, a laptop computer, a tablet, a mobile phone, a computing device of a vehicle (e.g., an in-vehicle communications system, an in-vehicle entertainment system, or an in-vehicle navigation system), a standalone interactive speaker (optionally having a display), a smart appliance such as a smart television, a video game console, and/or a wearable apparatus of a user that includes a computing device(e.g., a watch of the user having a computing device, glasses of the user having a computing device, a virtual or augmented reality computing device, etc.). Additional and/or alternative client devices can be provided.

The user input engine 111 can detect various types of user input at the client device 110. In some examples, user input detected at the client device 110 can include spoken utterance(s) of a human user of the client device 110 that is detected via microphone(s) of the client device 110. In these examples, the microphone(s) of the client device 110 can generate audio data that captures the spoken utterance(s). In other examples, user input detected at the client device 110 can include touch input(s) of a user of the client device 110 that is detected via user interface input device(s) (e.g., touch sensitive display(s), remote control(s), computer mouse(s), and/or stylus(es)) of the client device 110, and/or typed input(s) detected via user interface input device(s) (e.g., touch sensitive display(s) and/or real or virtual keyboard(s)) of the client device 110. In these examples, the user interface input device(s) of the client device 110 can generate textual data that captures the touch input and/or the typed input. In other examples, the user input detected at the client device 110 can include vision-based input of a human user of the client device 110 that is detected via vision component(s) (e.g., camera(s)) of the client device 110.

The rendering engine 112 can cause content and/or other output to be visually rendered for presentation to the user at the client device 110 (e.g., via a touch sensitive display or other user interface output device(s)) and/or audibly rendered for presentation to the user at the client device 110 (e.g., via speaker(s) or other user interface output device(s)). The content and/or other output can include, for example, responsive content that is responsive to user input provided by a user of the client device 110, notifications, selectable graphical elements, and/or any other content and/or output described herein.

The client device 110 is illustrated in FIG. 1 as communicatively coupled to a GM software application creation system 120 over one or more networks 199 (e.g., any combination of WIFI, BLUETOOTH, or other local area networks (LANs); ethernet, the Internet, or other wide area networks (WANs); and/or any other wired or wireless networks). The GM software application creation system 120 can be implemented by, for example, a high-performance server, a cluster of high-performance servers, and/or any other computing device that is remote from the client device 110. The GM software application creation system 120 includes, in various implementations, a base capabilities engine 130, a generative model capabilities engine 140, a GM engine 150, an error correction engine 160, a software application deployment engine 170, and a software application management engine 180. The GM engine 150 can include various sub-engines, such as a GM input engine 151 and a GM processing engine 152. Although FIG. 1 is depicted with respect to certain engines and sub-engines, it should be understood that is for the sake of example and is not meant to be limiting. For example, one or more of the engines and/or sub-engines depicted in FIG. 1 can be combined and/or omitted.

The client device 110 and/or the GM software application creation system 120 can access various databases and/or systems. For instance, the client device 110 and/or the GM software application creation system 120 can access user profile database 110A that stores user profile data as described herein, GM(s) database 120A that stores one or more GMs as described herein, software application(s) database 120B that stores one or more software application and/or data associated therewith as described herein. However, it should be understood that, in various implementations, one or more of the databases may be access-restricted. For instance, in some implementations, the GM software application creation system 120 may not have access to the user profile database 110A (or may have limited access thereto via the GM software application creation client 113) and/or the software application(s) 120B database (e.g., in instances where a given software is generated and deployed locally at the client device 110). Although FIG. 1 is depicted with respect to certain databases and systems, it should be understood that is for the sake of example and is not meant to be limiting. For example, one or more of the databases and/or systems depicted in FIG. 1 can be combined and/or omitted.

Moreover, the client device 110 can execute the GM software application creation client 113. An instance of the GM software application creation client 113 can be an application that is separate from an operating system of the client device 110 (e.g., installed "on top" of the operating system) - or can alternatively be implemented directly by the operating system of the client device 110. The GM software application creation client 113 can communicate with the GM software application creation system 120 via one or more of the networks 199 (e.g., as shown in FIG. 1). It should be understood that the GM software application creation client 113 can implement the GM software application creation system 120 locally at the client device 110 via the GM software application creation client 113. However, it should also be understood that one or more aspects of the GM software application creation system 120 can be implemented remotely from the client device 110 (e.g., exclusively at a high-performance server or cluster of high-performance servers), or both remotely at the GM software application creation system 120 and locally the client device 110 (e.g., via the GM software application creation client 113) in a distributed manner.

Furthermore, the client device 110 and/or the GM responsive content system 120 may include one or more memories for storage of data and software applications, one or more processors for accessing data and executing the software applications, and other components that facilitate communication over one or more of the networks 199. In some implementations, one or more of the software applications can be installed locally at the client device 110, whereas in other implementations one or more of the software applications can be hosted remotely from the client device 110 (e.g., by one or more servers), but accessible by the client device 110 over one or more of the networks 199.

Although FIG. 1 is described with respect to a single client device having a single user, it should be understood that is for the sake of example and is not meant to be limiting. For example, one or more additional client devices of a user can also implement the techniques described herein. For instance, the client device 110, the one or more additional client devices, and/or any other computing devices of the user can form an ecosystem of devices that can employ techniques described herein. These additional client devices and/or computing devices may be in communication with the client device 110 and/or the GM software application creation system 120 (e.g., over the one or more networks 199). As another example, a given client device can be utilized by multiple users in a shared setting (e.g., a group of users, a household, etc.).

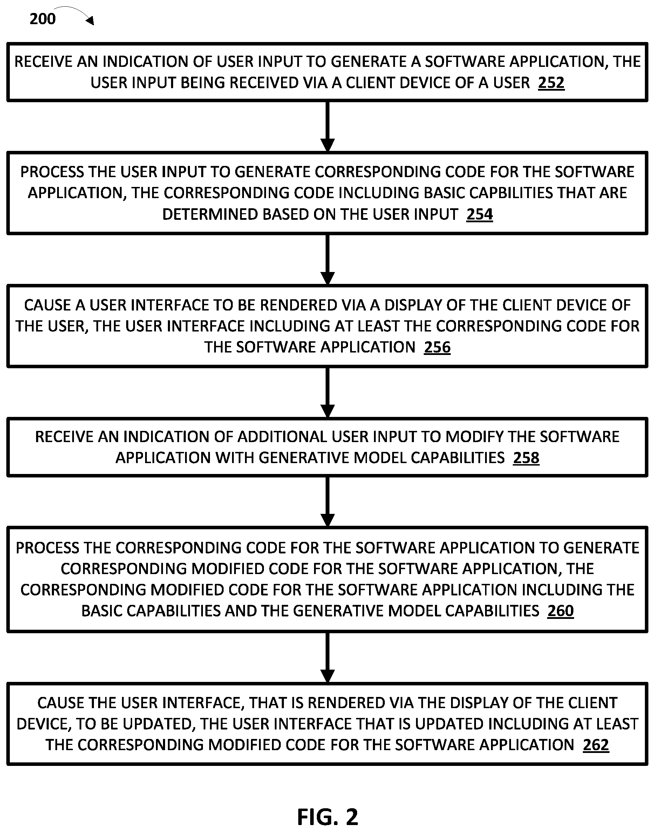

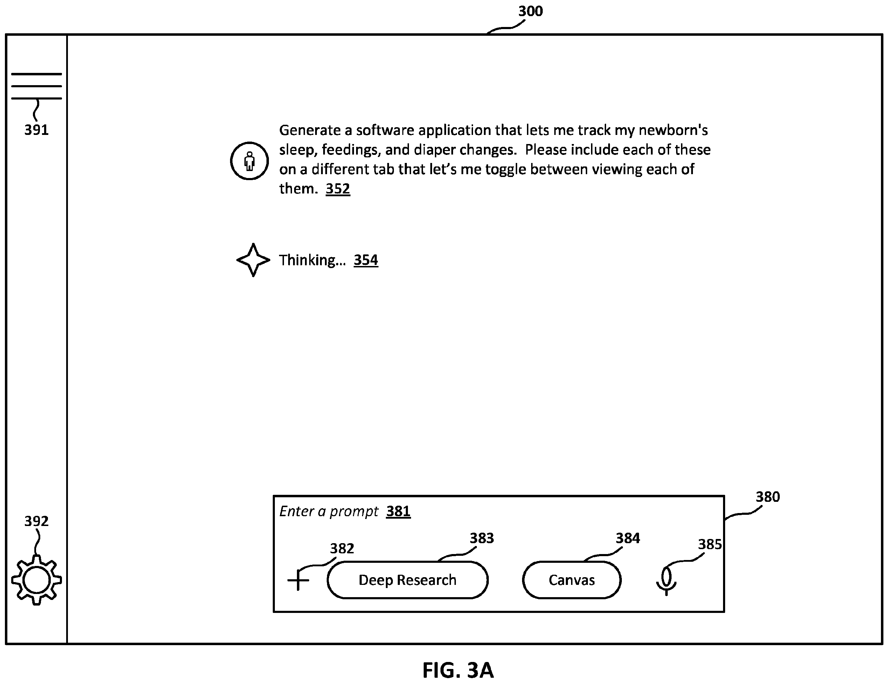

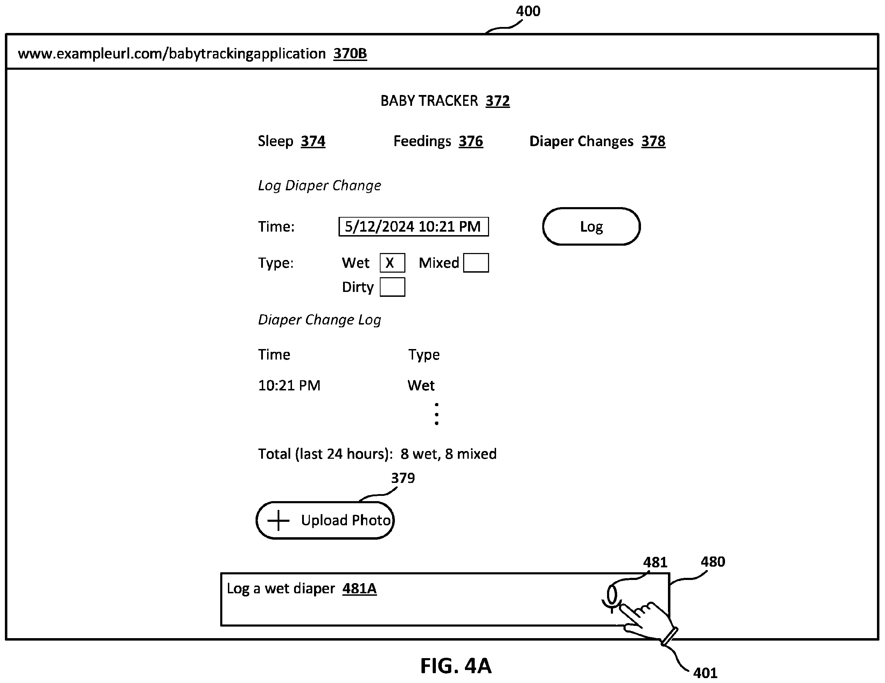

As described in more detail herein, the GM software application creation system 120 can be utilized to generate a software application and modify the software application with generative model capabilities using the various engines of FIG. 1 (e.g., as described with respect to FIGS. 2 and 3A-3I). Further, the GM software application creation system 120 can be utilized to manage deployment of the software application (e.g., as described with respect to FIGS. 4A-4B). The generation, modification, and management of deployment can achieve various technical advantages described herein. For instance, the generation and modification of the software application through a single, unified user interface can streamline the human-to-computer dialog between the user and the GM, such that the human-to-computer dialog therebetween concludes in a more quick and efficient manner, thereby conserving computational and/or network resources that would otherwise be consumed by compiling and then running the software application in different software environments. Further, by modifying corresponding code for the software application to include GM capabilities by automatically including one or more application programming interface (API) calls and/or one or more API keys, the user need not define these aspects, thereby further streamlining the human-to-computer interaction in the manner set forth above. Notably, in automatically defining the API call(s) and/or the API key(s), the GM software application creation system 120 can do so in a computationally efficient manner that balances certain capabilities of different GM(s) that are available for utilization by the software application, thereby balancing the user's desires with computational efficiency.

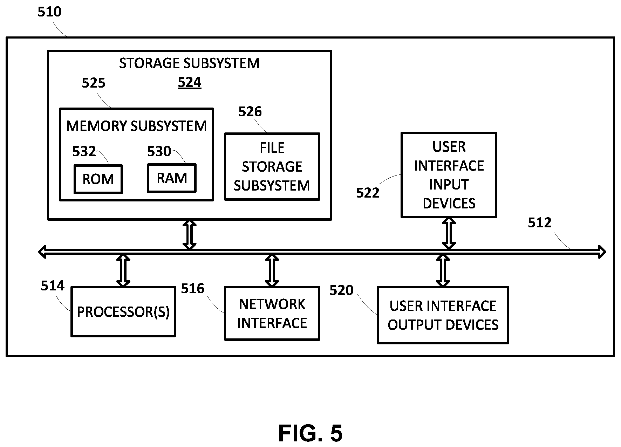

Turning now to FIG. 2, a flowchart illustrating an example method 200 of generating and modifying a software application with generative model capabilities is depicted. For convenience, the operations of the method 200 are described with reference to a system that performs the operations. This system of the method 200 includes at least one processor, memory, and/or other component(s) of computing device(s) (e.g., the client device 110 of FIG. 1 via the GM software application creation client 113, the GM software application creation system 120 of FIG. 1, the computing device 510 of FIG. 5, and/or other computing devices). Moreover, while operations of the method 200 are shown in a particular order, this is not meant to be limiting. One or more operations may be reordered, omitted, and/or added.

At block 252, the system receives an indication of user input to generate a software application, the user input being received via a client device of a user. For example, the system can receive the indication of the user input via the user input engine 111 of the client device 110 of FIG. 1. The user input can be, for example, spoken input of the user captured in audio data generated by microphone(s) of the client device 110, touch or typed input of the user detected at user interface input device(s) of the client device 110, and/or other types of user inputs. In some implementations, the user input can be initially provided via a single chat interface (e.g., as illustrated in FIG. 3A).

At block 254, the system processes the user input to generate corresponding code for the software application, the corresponding code includes basic capabilities that are determined based on the user input. In various implementations, the system can cause the GM engine 150 to generate the corresponding code for the software application that includes the basic capabilities that are determined based on the user input. In particular, the system can cause a GM input engine 151 of the GM engine 150 to determine GM input. The GM input can include, for example, the user input, and optionally various system prompts, an indication of the basic capabilities for the software application, user profile data associated with the user that is stored in the user profile database 110A, and/or other data (e.g., conversational context data, etc.). Further, the system can cause the GM processing engine 152 to process the GM input, using GM stored in the GM(s) database 120A, to generate the corresponding code.

In some versions of those implementations, the system can cause the basic capabilities engine 130 to determine the basic capabilities needed for the software application and based on the user input. For instance, the basic capabilities engine 130 can determine a layout of the software application (e.g., a header or title for the software application, an arrangement of various aspects of the software application, different tabs for the software application), input fields and/or types of input fields for the software application, data types for the software application, selectable element or graphical user interface (GUI) elements for the software application, and/or any other basic capabilities needed for the software application. Notably, the basic capabilities for the software application may not require or invoke the generative model when the software application is subsequently deployed. In some versions of those implementations, the basic capabilities engine 130 can determine the basic capabilities described herein in conjunction with the GM engine 150 as part of, for example, a chain-of-thought process where the system generates a plan for generating the corresponding code prior to, or in parallel with, generation of the corresponding code. In additional or alternative versions of those implementations, the basic capabilities engine 130 can determine the basic capabilities described herein prior to the GM engine 150 generating the corresponding code, and an indication of the basic capabilities can be provided to the GM engine 150 for use in generating the corresponding code (e.g., as part of the GM input as noted above).

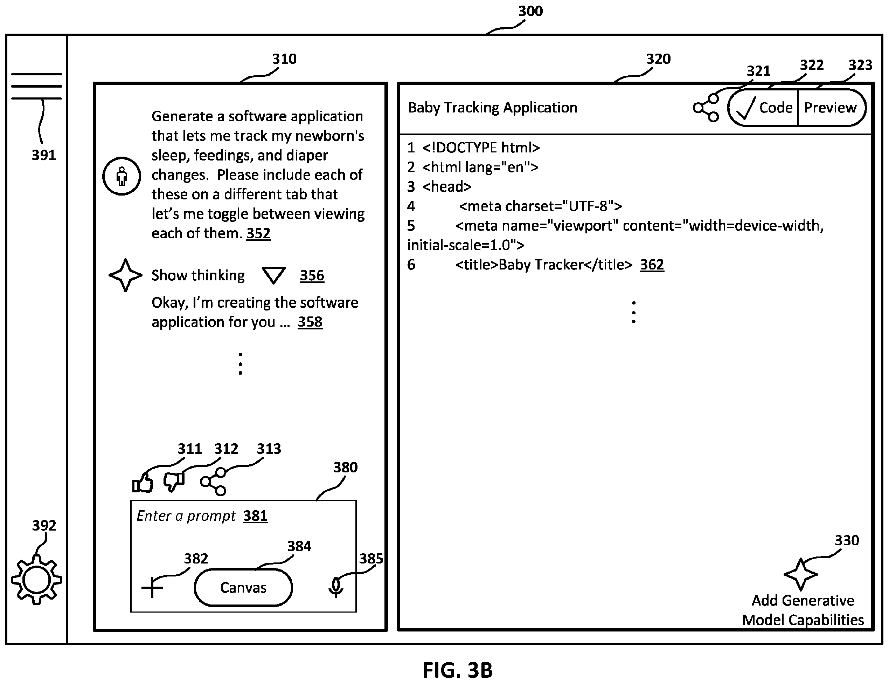

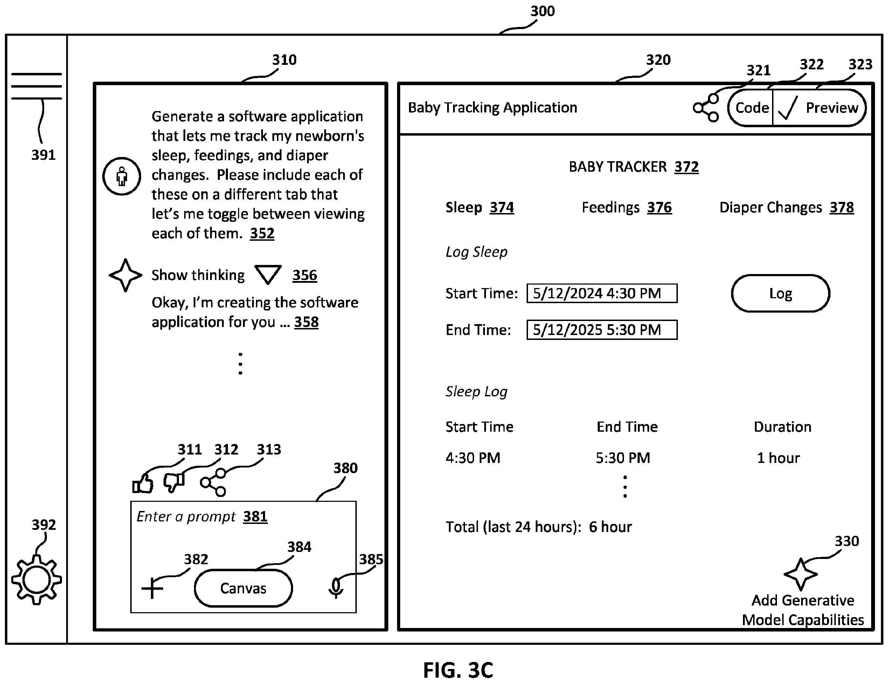

At block 256, the system causes a user interface to be rendered via a display of the client device of the user, the user interface including at least the corresponding code for the software application. For example, the system can cause the user interface to be rendered via the rendering engine 112 of the client device 110 of FIG. 1. As noted above, in some implementations, the user input can be initially provided via a single chat interface (e.g., as illustrated in FIG. 3A). However, and in response to determining that the user input includes a request to generate the software application, the system can automatically transition to a dual-pane interface that includes a chat interface and a visual interface (e.g., as illustrated in FIGS. 3B-3I). In some implementations, the corresponding code can be rendered in a visually streaming manner, allowing the user to see the corresponding code as it is being generated line-by-line in the visual interface (e.g., as illustrated in FIG. 3B). In some versions of those implementations, and while the corresponding code is being rendered in the visually streaming manner, the system can optionally cause "thinking" of the generative model to be rendered in the chat interface. In additional or alternative versions of those implementations, and in response to determining that graphical aspects of the software application has been generated which can occur prior to completion of the corresponding code or upon completion of the corresponding code, the system can optionally cause a preview of the software application to be rendered in the visual interface (e.g., as illustrated in FIGS. 3C-3E).

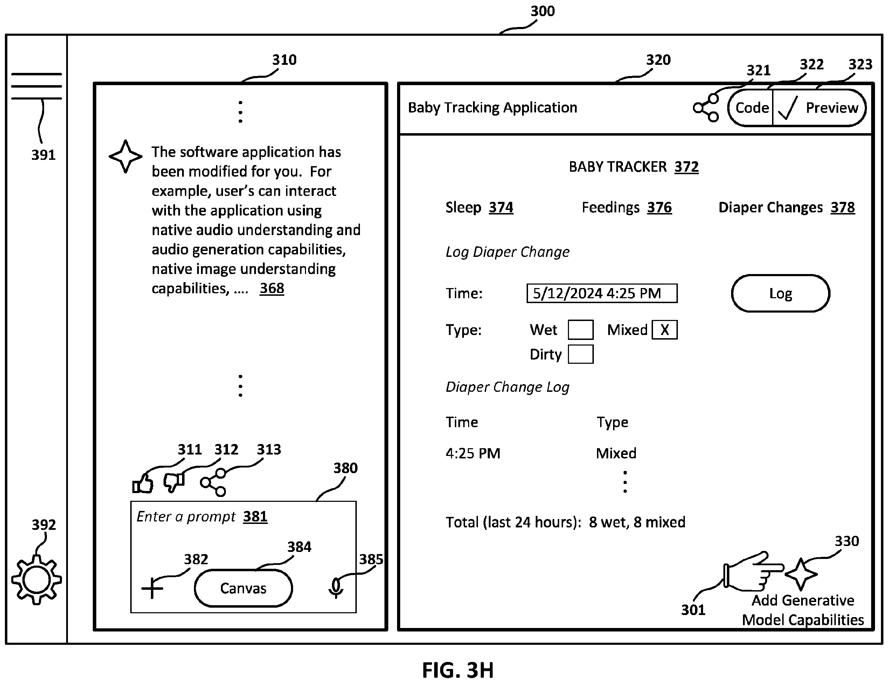

At block 258, the system receives an indication of additional user input to modify the software application with generative model capabilities. For example, the system can receive the indication of the additional user input via the user input engine 111 of the client device 110 of FIG. 1. In some implementations, the user input can be, for example, spoken input of the user captured in audio data generated by microphone(s) of the client device 110, touch or typed input of the user detected at user interface input device(s) of the client device 110, and/or other types of user inputs. In these implementations, the additional user input can specify particular generative model capabilities to be added to the software application, and the system can cause the generative model capabilities engine 140 to process the additional user input to determine the generative model capabilities to be added to the software application. In additional or alternative implementations, the additional user input can be a selection of a graphical element that, when selected, causes one or more generative model capabilities to be added to the software application, and the system can cause the generative model capabilities engine 140 to infer the generative model capabilities to be added to the software application (e.g., as illustrated in FIG. 3H).

In various implementations, the generative model capabilities can include, for example, text understanding/processing capabilities, text generation capabilities, image and/or video understanding/processing capabilities, image and/or video generation capabilities, audio understanding/processing capabilities, audio generation capabilities, an indication of one or more generative models that are available to implement one or more of the generative model capabilities, and/or any other generative model capabilities that require or invoke a GM, or that are otherwise not present in the basic capabilities that are initially included in the corresponding code for the software application. As noted above, in implementations where the additional user input specifies one or more generative model capabilities to be added to the software application, the generative model capabilities engine 140 can determine the generative model capabilities to be added to the software application based on the additional user input. However, in implementations where the additional user input is a selection of a graphical element that, when selected, causes one or more generative model capabilities to be added to the software application, the generative model capabilities engine 140 can infer the generative model capabilities to be added to the software application based on, for example, a type of the software application being conducive to certain generative model capabilities, default generative model capabilities (e.g., including all of the aforementioned generative model capabilities), an account type of an account of the user, feedback from other users for a prior instance of the software application that was deployed or an additional software application that was deployed, and/or other considerations.

At block 260, the system processes the corresponding code for the software application to generate corresponding modified code for the software application, the corresponding modified code for the software application including the basic capabilities and the generative model capabilities. In various implementations, the system can cause the GM engine 150 to generate the modified corresponding code for the software application that includes the basic capabilities that are determined based on the user input and the generative model capabilities that are determined based on the additional user input or otherwise inferred. In particular, the system can cause the GM input engine 151 of the GM engine 150 to determine additional GM input. The additional GM input can include, for example, the corresponding code and an indication of the generative model capabilities to be added to the software application that are determined or otherwise inferred, and optionally the user input, various system prompts, an indication of the basic capabilities for the software application, user profile data associated with the user that is stored in the user profile database 110A, and/or other data (e.g., conversational context data, etc.). Further, the system can cause the GM processing engine 152 to process the GM input, using GM stored in the GM(s) database 120A, to generate the corresponding modified code.

In these implementations, and in generating the corresponding modified code, the GM processing engine 152 can modify the corresponding code for the software application to include one or more application programming interface (API) calls to one or more GMs and one or more API keys to be used by the one or more GMs. Notably, the additional user input, whether the additional user input that specifies the generative model capabilities to be added to the software application or the selection of the graphical element, the API calls and/or the API keys need not be specifically defined by the user. Put another way, the GM processing engine 152 can automatically modify the corresponding code to include the API calls and/or the API keys to generate the corresponding modified code.

At block 262, the system causes the user interface, that is rendered via the display of the client device, to be updated, the user interface that is updated including at least the corresponding modified code for the software application. For example, the system can cause the user interface, that is being rendered via the rendering engine 112 of the client device 110 of FIG. 1, to be updated. In some implementations, the corresponding modified code can be rendered in a visually streaming manner, allowing the user to see the corresponding code as it is being modified in the visual interface. In some versions of those implementations, and while the corresponding modified code is being rendered in the visually streaming manner, the system can optionally cause "thinking" of the generative model to be rendered in the chat interface. In additional or alternative versions of those implementations, and in response to determining that graphical aspects of the software application, that is updated based on the corresponding modified code, has been generated which can occur prior to completion of the corresponding modified code or upon completion of the corresponding modified code, the system can optionally cause a preview of the software application to be rendered in the visual interface.

Although the method 200 of FIG. 2 is described with respect to a single iteration of initially generating the corresponding code for the software application and then subsequently generating the corresponding modified code for the software application, it should be understood that is for the sake of example and is not meant to be limiting. Rather, it should be understood that the generation and modification of the software application can be an iterative process between the user and the system.

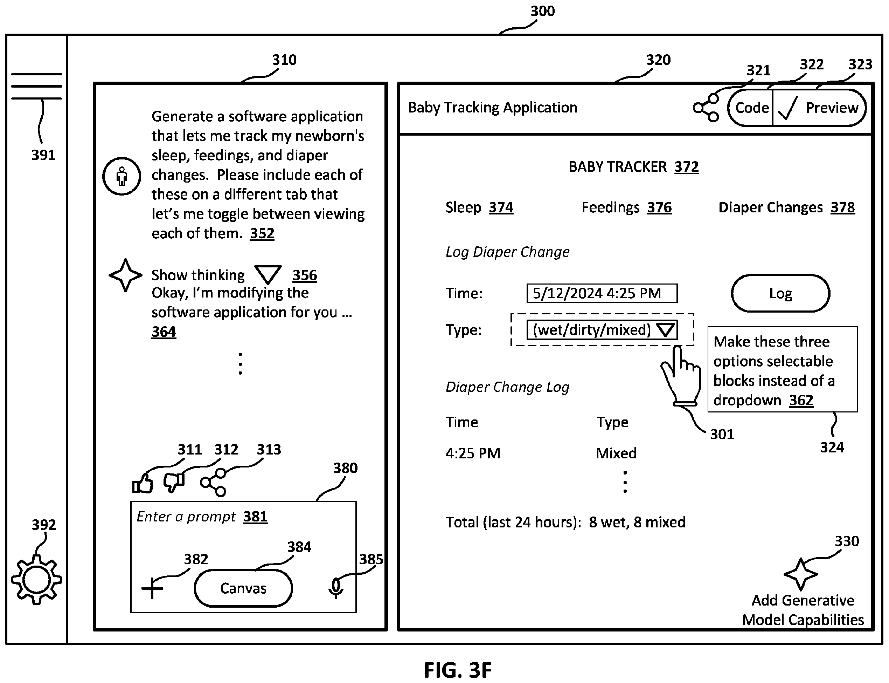

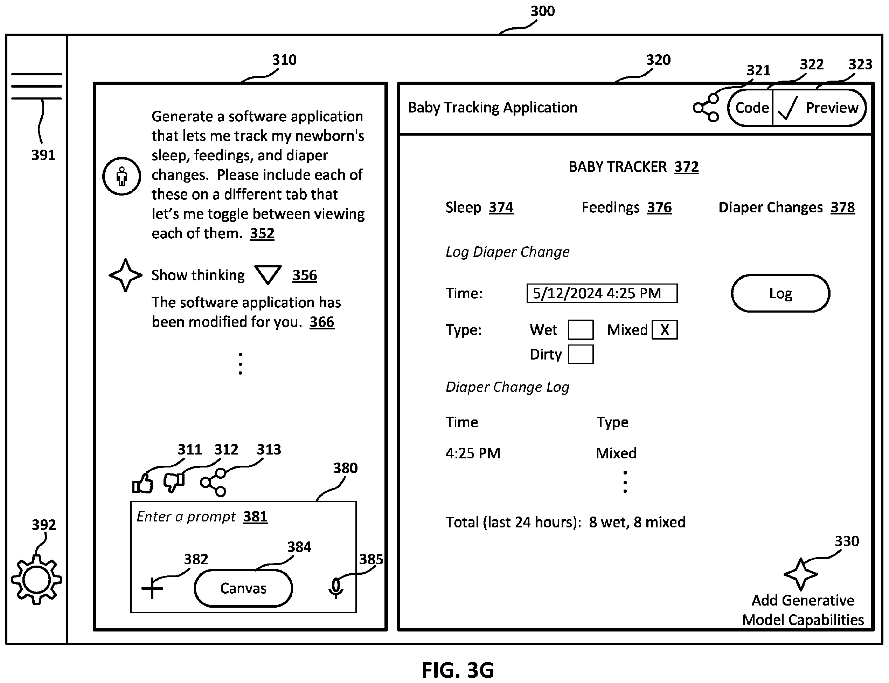

Further, although the method 200 of FIG. 2 is described with respect to modifying the software application with the generative model capabilities, it should be understood that is for the sake of example and is not meant to be limiting. Rather, it should be understood that, in various implementations, the user can additionally or alternatively interact with the system to modify the basic capabilities for the software application. In some implementations, the system can modify the basic capabilities of the software application through the chat interface. In additional or alternative implementations, the system can modify the basic capabilities through the visual interface without going through the chat interface (e.g., as illustrated in FIGS. 3F and 3G).)

Moreover, in various implementations, the system can cause the error correction engine 160 to process the corresponding modified code for the software application to determine whether there are error(s) in the corresponding modified code for the software application. In some versions of those implementations, and in response to determining that there are error(s) in the corresponding modified code, the system can process the corresponding modified code for the software application to correct the error(s). For example, the system can compile the corresponding modified code (e.g., in the same software environment in which the corresponding modified code is generated), determine whether the corresponding modified code includes one or more errors (e.g., compiling errors), and, in response to determining that there are error(s) in the corresponding modified code, process the corresponding modified code to correct the error(s).

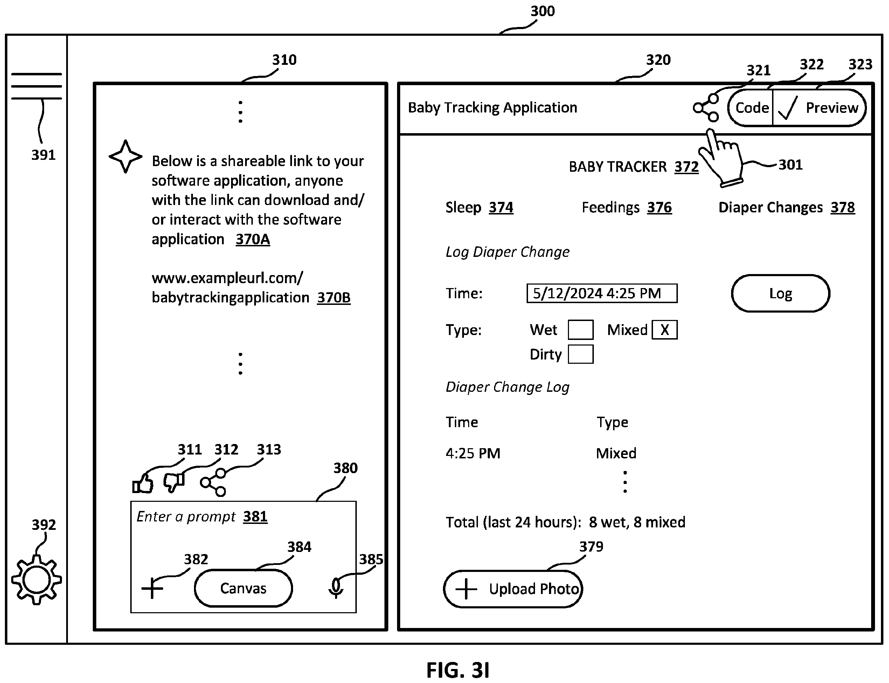

Furthermore, in various implementations, the system can receive further additional user input to share the software application with other users (e.g., as illustrated in FIG. 3I). In some versions of those implementations, the software application deployment engine 170 can cause the software application to be shared via a shareable link such as a uniform resource locator (URL) and can be accessed as a progressive web application (PWA) via a web browser. In additional or alternative versions of those implementations, the software application deployment engine 170 can cause the software application to be shared as a shareable and downloadable software application that can be added to, for instance, a home screen of a client device such as a home screen of a laptop or mobile device of the user and/or other user(s). In these implementations, this enables the user and/or the other users to interact with the software application and/or download the corresponding modified code for the software application to further iterate thereon. In these implementations, the system can cause the software application management engine 180 to track utilization of the software application, obtain feedback for the software application from the user and/or other user(s), and/or otherwise manage the deployed software application.

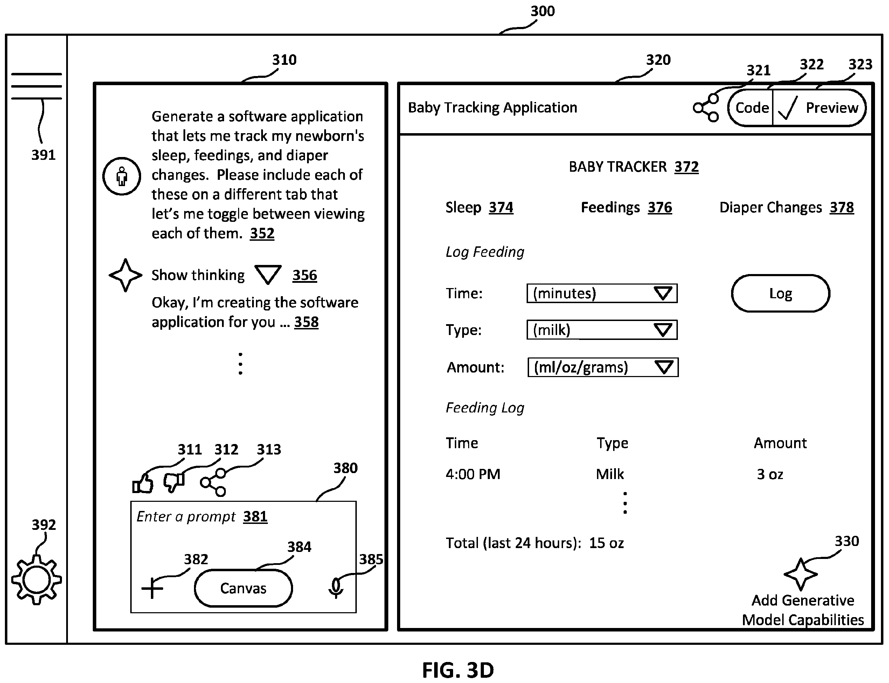

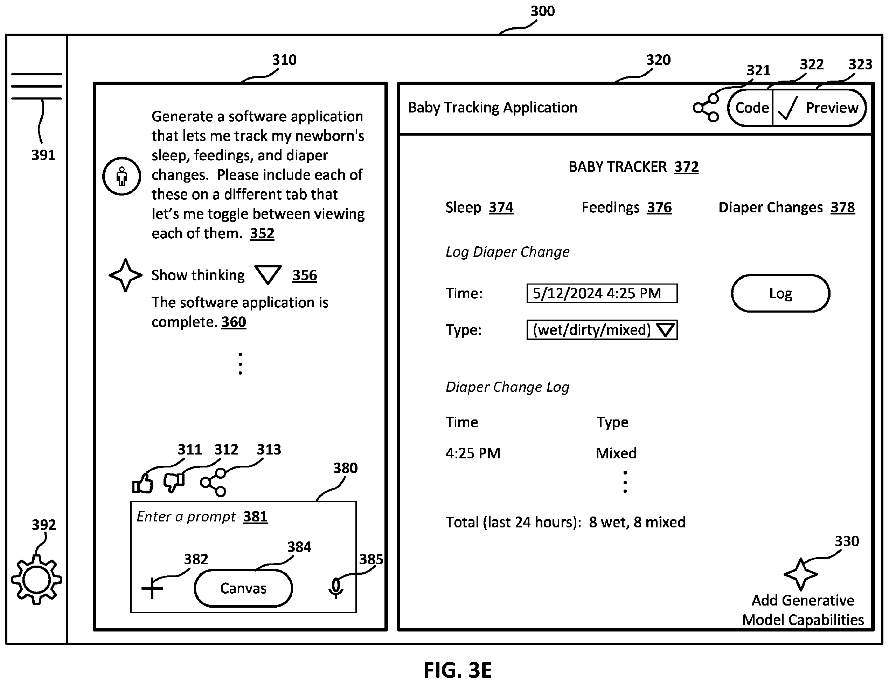

Turning now to FIGS. 3A, 3B, 3C, 3D, 3E, 3F, 3G, 3H, and 3I, various non-limiting examples of generating and modifying a software application with generative model capabilities are illustrated. Referring specifically to FIG. 3A, a display 300 of a client device (e.g., an instance of the client device 100 of FIG. 1) is depicted. The display 300 depicts a single user interface and includes an area 380 through which a user of the client device can interact with a system that utilizes a generative model. For example, entry field 381 enables the user to provide natural language input to interact with the system through natural, icon 382 enables the user to upload images, videos, documents, or other content that can be processed by the system, icons 383 and 384 enable the user to interact with the system in certain modes, and icon 385 enables the user to interact with the system through voice-based inputs (which can be converted to text or natively processed as audio data using the generative model). Further, icon 391 enables the user to expand a menu to start a new interaction with the system, view prior interactions with the system, etc., and icon 392 enables the user to view settings and help options associated with interactions with the system.

For the sake of example, assume that the user of the client device provides user input 352 of "Generate a software application that lets me track my newborn's sleep, feedings, and diaper changes. Please include each of these on a different tab that lets me toggle between viewing each of them." In this example, the user input 352 includes a request to generate a software application and, in response, the system can initiate processing using the generative model as indicated by output 354 and transition from the single chat interface as shown in FIG. 3A to the dual-pane interface as shown in FIG. 3B.

Turning now to FIG. 3B, the dual-pane interface is illustrated as including a chat interface 310 and a visual interface 320. The chat interface 310 is depicted as including the user input 352, a selectable element 356 that enables the user to view the generative model thinking in real time (e.g., which can include a listing of basic capabilities for the software application that are determined based on processing at least the user input 352), and text-based output 358 indicating that the system is using the generative model to generate the software application as requested by the user. Further, the chat interface 310 includes selectable elements 311 and 312 that enable the user to provide positive feedback and negative feedback, respectively, with respect to performance of the generative model. Moreover, the chat interface 310 includes a selectable element 313 that enables the user to share the chat interaction with one or more other users (e.g., via a shareable link or by other means), and optionally without sharing any corresponding code or software application(s).

Further, the visual interface 320 is depicted as including corresponding code 362 for the software application that is being generated through utilization of the generative model and that is being rendered in a visually streaming manner (e.g., line-by-line as it is being generated). The visual interface 320 is also depicted as including a selectable element 313 that enables the user to share the corresponding code 362 and/or the software application (e.g., "Baby Tracking Application") with one or more other users (e.g., via a shareable link or by other means), and optionally without sharing any of the chat interaction. The visual interface 320 is also depicted as including selectable elements 322 and 323 that enable the user to toggle between viewing the corresponding code 362 and a preview of the software application.

In some implementations, the user may not be able to preview the software application until a sufficient quantity of the corresponding code 362 (or the entirety of the corresponding code 362) is generated and the selectable element 323 may be "grayed out" or otherwise un-togglable. In some implementations, and in response to the sufficient quantity of the corresponding code 362 (or the entirety of the corresponding code 362) being generated, the system can automatically transition from the code view to the preview view.

The visual interface 320 is also depicted as including graphical element 330 that, when selected, can cause generative model capabilities to be added to the software application. In some implementations, the graphical element 330 can be rendered while the corresponding code 362 is being generated, and a user selection thereof can modify generation of the corresponding code 362 "on-the-fly" to include the generative model capabilities (and optionally re-generating code to include the generative model capabilities). In additional or alternative implementations, the graphical element 330 may not be rendered until the corresponding code 362 is complete.

Turning now to FIG. 3C, and for the sake of example, assume that the system automatically transitions from the code view to the preview view in response to the sufficient quantity of the corresponding code 362 being generated. The software application is illustrated with a header 372 (e.g., "BABY TRACKER") and tabs 374, 376, and 378 through which the user can cycle through to analyze the preview of the code. For example, the tab 374 is associated with tracking sleep and not only enables the user to log start and end times of a sleep session, but also allows the user to view a sleep log for the past 24 hours. Notably, although the software application may only be a preview at this point in time (e.g., as indicated by the output 358 indicating that the system is using the generative model to generate the software application persisting in the chat interface 310), the user can still interact with the preview of the software application.

Turning now to FIG. 3D, further assume that the user directed further additional user input to the tab 376. The tab 376 is associated with tracking feedings and not only enables the user to track a time of feeding, a type of feeding, and an amount of feeding, but also allows the user to view a feeding log for the past 24 hours. Similarly, although the software application may only be a preview at this point in time (e.g., as indicated by the output 358 indicating that the system is using the generative model to generate the software application persisting in the chat interface 310), the user can still interact with the preview of the software application.

Turning now to FIG. 3E, further assume that the user directed further additional user input to the tab 378. The tab 378 is associated with tracking diaper changes and not only enables the user to track a time and type of a diaper change, but also allows the user to view a diaper change log for the past 24 hours. Notably, output 360 can indicate that the corresponding code for the software application has been completed. Although the output 360 indicates that the corresponding code for the software application has completed, the user can still interact with the system to modify the software application.

Turning now to FIG. 3F, further assume that the user selects (e.g., as indicated by 301) a portion of the preview of the software application that is associated with the type of the diaper change while viewing the tab 378. In some implementations, this selection can cause an entry field 324 to be rendered within the visual interface 320. In these implementations, the user can provide further additional user input directed to the entry field 324, such as further additional user input 362 of "Make these three options selectable blocks instead of a dropdown." Notably, the requested modification in this example is a modification to the basic capabilities of the software application in that it is simply changing how data is entered into the eventual software application and this data entry does not require or invoke a generative model. In response to receiving the further additional user input 362, the system can generate corresponding modified code for the software application as indicated by output 364. In some versions of those implementations, and although the further additional user input 362 is received via the entry field 324, the further additional user input 362 can be included in the chat interface 310 and appear as if it was received via the chat interface 310.

Turning now to FIG. 3G, and subsequent to generating the modified corresponding code, the dropdown has changed to three options selectable blocks instead for the type of the diaper change while viewing the tab 378. Although FIGS. 3F and 3G are described with respect to modifying the basic capabilities of the software application in that it is simply changing how data is entered into the eventual software application, it should be understood that is for the sake of example and is not meant to be limiting. Rather, it should be understood that many other modifications to the basic capabilities are contemplated herein.

Turning now to FIG. 3H, further assume that the user selects (e.g., as indicated by 301) the graphical element 330 that, when selected, can cause the generative model capabilities to be added to the software application, and the system processes at least the corresponding code for the software application to add the generative model capabilities as indicated by output 368 of "The software application has been modified for you. For example, users can interact with the application using native audio understanding and audio generation capabilities, native image understanding capabilities, ...." Notably, the software application previously required the user to use various dropdowns, select various boxes, provide specific times/days, etc. However, with the added generative model capabilities, the user can now interact with the software application using native audio understanding and audio generation capabilities of a generative model. Further, the software application previously required the user manually enter information about feedings. However, with the added generative model capabilities, the user can now upload images of food to the software application, and it can utilize native image understanding and processing capabilities of a generative model.

Although FIG. 3H is described with respect to adding certain generative model capabilities to the software application, it should be understood that is for the sake of example and is not meant to be limiting. Rather, it should be understood that many other generative model capabilities are contemplated herein. Although not depicted, the user additionally, or alternatively, could interact with entry field 381 to specify certain generative model capabilities that they desire to be added to the software application.

As described herein, in various implementations, the generative model capabilities that are added to the software application in response to receiving a selection of the graphical element 330 can be inferred based on various factors such as, for example, the type of the software application, an account type of an account of the user (e.g., a general account type or a premium account type), prior utilization of the generative model by the user, feedback from other users for a prior instance of the software application that was deployed or an additional software application that was deployed, and/or other considerations. In the example of FIGS. 3A-3H, the "Baby Tracking Application" could be considered a "lifestyle" type software application where native audio understanding and audio generation capabilities of a generative model are desirable and where native image understanding capabilities are desirable. In contrast, had the software application been for a "game" type of software application, native video understanding capabilities of the generative model may be more appropriate rather than the native audio understanding and audio generation capabilities to allow for analysis of gameplay to be performed by the generative model. Further, the premium type of account may provide the user with unlimited access to generative model capabilities, but a general account type of account may provide some (e.g., limited) access to the generative model capabilities.

Further, in adding the generative model capabilities to the software application, not only can various API calls and/or API keys be added to the corresponding modified code for the software application, but additional graphical elements that are representative of the generative model capabilities can be added to the software application (e.g., selectable element 379 to upload a photo and leverage the native image understanding capabilities as shown in FIG. 3I). As described herein, these API calls and/or API keys can be to the same generative model or to different generative models that may be computationally efficient to implement (e.g., because they have fewer parameters, lower latency, consume less computational resources, etc.), but can effectively implement the generative model capabilities that are inferred.

Turning now to FIG. 3I, further assume that the user provides further additional user input to share the software application (e.g., as indicated at 301). In response to receiving the further additional user input to share the software application, the system can provide output 370A of "Below is a shareable link to your software application, anyone with the link can download and/or interact with the software application," and provide the shareable link as indicated at 370B. This enables the user to send the shareable link with other users (e.g., via social media, text, e-mail, etc.) to provide them with access to the software application that can be instantiated as a progressive web application (PWA) via a web browser. Additionally, or alternatively, the system can generate a downloadable and shareable software application package that enables the user and/or other user(s) to download the software, post the software application to a software application marketplace, and/or otherwise allow the software application to be downloaded and installed at a client device or server.

Although FIGS. 3A-3I illustrate certain interfaces, certain graphical elements, certain icons, certain interactions, etc., it should be understood that is for the sake of example and is not meant to be limiting. Rather, it should be understood that many different types of interfaces, graphical elements, icons, interactions, etc., can be utilized to generate a software application and modify it with generative model capabilities in accordance with implementations disclosed herein.

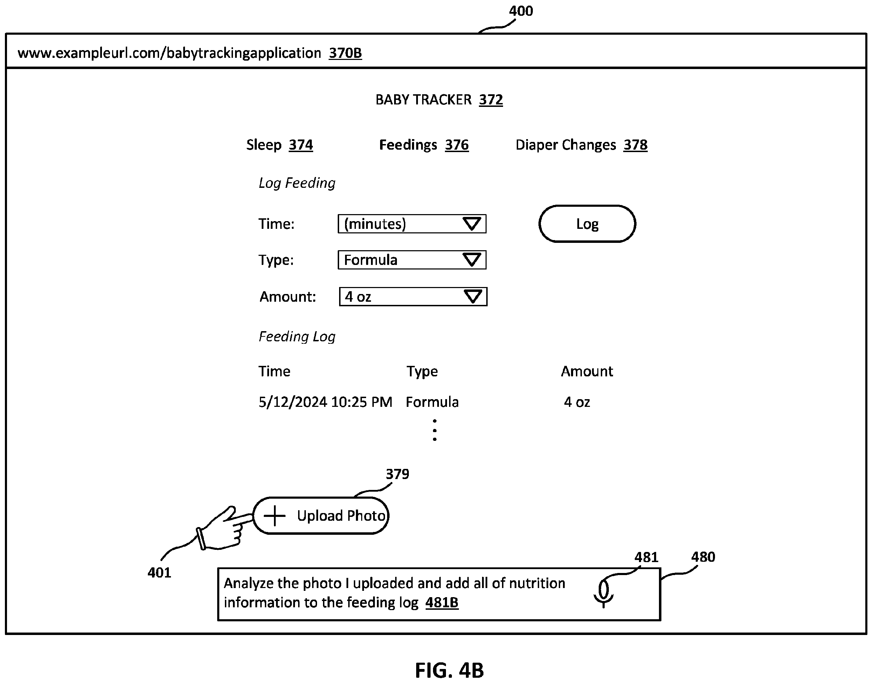

Turning now to FIGS. 4A and 4B, various non-limiting examples of interacting with a software application with generative model capabilities that were generated and modified as described with respect to FIGS. 3A, 3B, 3C, 3D, 3E, 3F, 3G, 3H, and 3I are depicted. Referring specifically to FIG. 4A, a display 400 of a client device (e.g., an instance of the client device 100 of FIG. 1) is depicted. The display 400 depicts a progressive web application (PWA) accessed through the shareable link as indicated at 370B that was generated and modified as described with respect to FIGS. 3A, 3B, 3C, 3D, 3E, 3F, 3G, 3H, and 3I. Notably, the display 400 could be of a client device of the user that generated and modified the software application as described with respect to FIGS. 3A, 3B, 3C, 3D, 3E, 3F, 3G, 3H, and 3I, or could be of an additional client device of another user that has access to the shareable link.

Further, the display 400 includes an area 480 through which the user of the client device can interact with the software application that has both basic capabilities and generative model capabilities. The user can interact with the area 480 through touch and/or typed input, and/or via speech inputs through actuation of icon 481 that enables the user to interact with the software application through voice-based inputs (which can be converted to text or natively processed as audio data using the generative model).

For the sake of example, assume that a user directs input to the icon 481 (e.g., as indicated by 401) to interact with the software application using the native audio understanding and processing capabilities of the software application through utilization of API call(s) to a generative model and using API key(s) that were added to the software application as part of the generative model capabilities. Further assume that the user provides user input of 481A of "Log a wet diaper." In this example, and through utilization of the generative model, the software application can not only understand the user input that was spoken, but can also control the software application to log the wet diaper as requested by the user. For instance, the generative model can infer a current date and a current time that the spoken input is received as a parameter for the "Time" parameter of "Log Diaper Change" and check the "Wet" box for the "Type" parameter of "Log Diaper Change" , and then automatically select the "Log" button to log the diaper change as requested by the user through utilization of the generative model capabilities. Further, the software application, and through utilization of the basic capabilities can add the diaper change to the "Diaper Change Log" as depicted.

Turning now to FIG. 4B, at a subsequent instance of time, further assume that user directs user input to the selectable element 379 and uploads a photo to the software application that can be processed using the native image understanding and processing capabilities of the software application through utilization of API call(s) to a generative model (e.g., the same generative model called in the example of FIG. 4A or a different generative model) and using API key(s) that were added to the software application as part of the generative model capabilities.

For the sake of example, further assume that the user provides user input of 481B of "Analyze the photo I uploaded and add all of the nutrition information to the feeding log." In this example, and through utilization of the generative model, the software application can not only process the image that was uploaded to identify and obtain nutritional information for any food items included in the image (and optionally using a retrieval augmented generation (RAG) process), but can also control the software application to log the nutritional information such that it is added to the "Feeding Log". For instance, the image can include an image of a bottle of formula, and the generative model can determine a type of the formula and a quantity included in the bottle of formula, use RAG to obtain the nutritional information for the type and quantity of the formula, and then use this nutritional information to populate the "Log Feeding" parameters, and automatically select the "Log" button to log the feeding as requested by the user through utilization of the generative model capabilities. Further, the software application, and through utilization of the basic capabilities can add the feeding to the "Feeding Log".

Although utilization of certain basic capabilities and certain generative model capabilities are described with respect to FIGS. 4A and 4B, it should be understood that those capabilities are described as non-limiting examples to illustrate techniques contemplated herein. Moreover, it should be understood that these capabilities can be dependent on a type of the application, how the software application is generated and/or modified with the generative model capabilities, and so on.

Further, although FIGS. 3A-3I and 4A-4B are described with respect to a baby tracking application, it should be understood that is for the sake of example and is not meant to be limiting. As one non-limiting additional example, techniques described herein can be utilized to generate a software application to control robotic control systems that leverage generative model capabilities for understanding environments, generating plans to perform various robotic tasks, simulating robotic action in simulated environments, and/or controlling a robot. It should be understood that many other types of software applications are contemplated herein, including software applications that can control various technical systems, such as analyzing and controlling various smart home environments.

Turning now to FIG. 5, a block diagram of an example computing device 510 that may optionally be utilized to perform one or more aspects of techniques described herein is depicted. In some implementations, one or more of a client device, cloud-based automated assistant component(s), and/or other component(s) may comprise one or more components of the example computing device 510.

Computing device 510 typically includes at least one processor 514 which communicates with a number of peripheral devices via bus subsystem 512. These peripheral devices may include a storage subsystem 524, including, for example, a memory subsystem 525 and a file storage subsystem 526, user interface output devices 520, user interface input devices 522, and a network interface subsystem 516. The input and output devices allow user interaction with computing device 510. Network interface subsystem 516 provides an interface to outside networks and is coupled to corresponding interface devices in other computing devices.

User interface input devices 522 may include a keyboard, pointing devices such as a mouse, trackball, touchpad, or graphics tablet, a scanner, a touch screen incorporated into the display, audio input devices such as voice recognition systems, microphones, and/or other types of input devices. In general, use of the term "input device" is intended to include all possible types of devices and ways to input information into computing device 510 or onto a communication network.

User interface output devices 520 may include a display subsystem, a printer, a fax machine, or non-visual displays such as audio output devices. The display subsystem may include a cathode ray tube (CRT), a flat-panel device such as a liquid crystal display (LCD), a projection device, or some other mechanism for creating a visible image. The display subsystem may also provide non-visual display such as via audio output devices. In general, use of the term "output device" is intended to include all possible types of devices and ways to output information from computing device 510 to the user or to another machine or computing device.

Storage subsystem 524 stores programming and data constructs that provide the functionality of some or all of the modules described herein. For example, the storage subsystem 524 may include the logic to perform selected aspects of the methods disclosed herein, as well as to implement various components depicted in FIG. 1.

These software modules are generally executed by processor 514 alone or in combination with other processors. Memory 525 used in the storage subsystem 524 can include a number of memories including a main random access memory (RAM) 530 for storage of instructions and data during program execution and a read only memory (ROM) 532 in which fixed instructions are stored. A file storage subsystem 526 can provide persistent storage for program and data files, and may include a hard disk drive, a floppy disk drive along with associated removable media, a CD-ROM drive, an optical drive, or removable media cartridges. The modules implementing the functionality of certain implementations may be stored by file storage subsystem 526 in the storage subsystem 524, or in other machines accessible by the processor(s) 514.

Bus subsystem 512 provides a mechanism for letting the various components and subsystems of computing device 510 communicate with each other as intended. Although bus subsystem 512 is shown schematically as a single bus, alternative implementations of the bus subsystem 512 may use multiple busses.

Computing device 510 can be of varying types including a workstation, server, computing cluster, blade server, server farm, or any other data processing system or computing device. Due to the ever-changing nature of computers and networks, the description of computing device 510 depicted in FIG. 5 is intended only as a specific example for purposes of illustrating some implementations. Many other configurations of computing device 510 are possible having more or fewer components than the computing device depicted in FIG. 5.

In situations in which the systems described herein collect or otherwise monitor personal information about users, or may make use of personal and/or monitored information), the users may be provided with an opportunity to control whether programs or features collect user information (e.g., information about a user's social network, social actions or activities, profession, a user's preferences, or a user's current geographic location), or to control whether and/or how to receive content from the content server that may be more relevant to the user. Also, certain data may be treated in one or more ways before it is stored or used, so that personally identifiable information is removed. For example, a user's identity may be treated so that no personally identifiable information can be determined for the user, or a user's geographic location may be generalized where geographic location information is obtained (such as to a city, ZIP code, or state level), so that a particular geographic location of a user cannot be determined. Thus, the user may have control over how information is collected about the user and/or used.

In some implementations, a method implemented by one or more processors is provided and includes: receiving an indication of user input to generate a software application, the user input being received via a client device of a user; processing the user input to generate corresponding code for the software application, the corresponding code including basic capabilities that are determined based on the user input; causing a user interface to be rendered via a display of the client device of the user, the user interface including at least the corresponding code for the software application; receiving an indication of additional user input to modify the software application with generative model capabilities; processing the corresponding code for the software application to generate corresponding modified code for the software application, the corresponding modified code for the software application including the basic capabilities and the generative model capabilities; and causing the user interface, that is rendered via the display of the client device, to be updated, the user interface that is updated including at least the corresponding modified code for the software application.

These and other implementations of technology disclosed herein can optionally include one or more of the following features.

In some implementations, the additional user input to modify the software application with the generative model capabilities can be natural language input that defines the generative model capabilities and that is received via the user interface.

In some versions of those implementations, processing the corresponding code for the software application to generate the corresponding modified code for the software application can include: determining, based on the additional user input, the generative model capabilities; and processing the corresponding code for the software application to add one or more application programming interface (API) calls to one or more generative models to generate the corresponding modified code for the software application, the one or more API calls that are added being based on the natural language input that defines the generative model capabilities.

In some further versions of those implementations, the natural language input may not define the one or more API calls or provide an API key to the one or more generative models for the one or more API calls.

In additional or alternative versions of those implementations, processing the corresponding code for the software application to generate the corresponding modified code for the software application is in response to receiving the natural language input.

In some implementations, the additional user input to modify the software application with the generative model capabilities can be a selection of a graphical element that, when selected, adds the generative model capabilities.

In some versions of those implementations, processing the corresponding code for the software application to generate the corresponding modified code for the software application can include: inferring the generative model capabilities to be added to the software application; and processing the corresponding code for the software application to add one or more application programming interface (API) calls to one or more generative models to generate the corresponding modified code for the software application, the one or more API calls that are added being based on the generative model capabilities that are inferred.

In some further versions of those implementations, the generative model capabilities to be added to the software application can be inferred based on: a type of the software application, default generative model capabilities, an account type of an account of the user, or feedback from other users for a prior instance of the software application that was deployed or an additional software application that was deployed.

In additional or alternative further versions of those implementations, processing the corresponding code for the software application to generate the corresponding modified code for the software application can be in response to receiving the selection of the graphical element.

In additional or alternative further versions of those implementations, the selection of the graphical element does not define the one or more API calls or provide an API key to the one or more generative models for the one or more API calls.

In some implementations, the generative model capabilities can include one or more of: text understanding capabilities; text generation capabilities; image and/or video understanding capabilities; image and/or video generation capabilities; audio understanding capabilities; audio generation capabilities; or an indication of one or more generative models that are available to implement one or more of the generative model capabilities.

In some implementations, the user interface can enable the user to toggle between: the corresponding code for the software application or the corresponding modified code for the software application, and a preview of the software application.

In some implementations, the user interface can be a dual-pane interface, wherein a first portion of the dual-pane interface includes a chat interface, and wherein a second portion of the dual-pane interface includes a visual interface.

In some versions of those implementations, the additional user input to modify the software application with the generative model capabilities can be natural language input that received via the chat interface.

In additional or alternative versions of those implementations, the additional user input to modify the software application with the generative model capabilities can be a selection of a graphical element that, when selected, adds the generative model capabilities and that is rendered via the visual interface.

In additional or alternative versions of those implementations, the corresponding code for the software application can be rendered via the visual interface in a visually streaming manner while it is being generated.

In additional or alternative versions of those implementations, the user input can be received via a singular chat interface that is rendered at the client device, and the singular chat interface can automatically transition to the dual-pane interface in response to receiving the user input to generate the software application.

In additional or alternative versions of those implementations, the user interface can enable the user to toggle between: the corresponding code for the software application or the corresponding modified code for the software application, and a preview of the software application, and the additional user input to modify the software application with the generative model capabilities can be received via a selection of one or more graphical elements of the software application that are rendered as part of the preview of the software application.

In some implementations, the software application can be a progressive web application (PWA), and wherein the corresponding code and/or the corresponding modified code can be Hypertext Markup Language (HTML) or JavaScript.

In some implementations, the method can further include: causing the software application to be deployed for utilization by the user and/or one or more additional users.

In some versions of those implementations, causing the software application to be deployed can be in response to receiving an indication of further additional user input to share the software application.

In some further versions of those implementations, the method can further include: in response to receiving the further additional user input to share the software application: generating a shareable uniform resource locator (URL) that enables the user and/or one or more additional users to access the software application; and/or generating a shareable download packet that, when selected, causes the software application to be downloaded.

In some even further versions of those implementations, sharing the software application can share the corresponding modified code for the software application.

In additional or alternative further versions of those implementations, the method can further include, prior to causing the software application to be deployed for utilization by the user and/or the one or more additional users: compiling the corresponding modified code to determine whether the corresponding modified code includes one or more errors; and in response to determining that the corresponding modified code includes one or more errors, processing the corresponding modified code for the software application to correct the one or more errors; and subsequent to correcting the one or more errors, causing the software application to be deployed for utilization by the user.

In some even further versions of those implementations, compiling the corresponding modified code to determine whether the corresponding modified code includes one or more errors can be in response to receiving an indication of further additional user input to debug the software application.

In additional or alternative even further versions of those implementations, compiling the corresponding modified code to determine whether the corresponding modified code includes one or more errors can be in response to receiving the corresponding modified code being generated.

In additional or alternative further versions of those implementations, causing the software application to be deployed for utilization by the user and/or the one or more additional users can cause the software application to selectively make one or more application programming interface (API) calls to one or more generative models.

In some implementations, the method can further include: receiving an indication of further additional user input to modify the basic capabilities of the software application; processing the corresponding code for the software application to generate corresponding further modified code for the software application, the corresponding further modified code for the software application including modified basic capabilities and the generative model capabilities; and causing the user interface, that is rendered via the display of the client device, to be updated, the user interface that is updated including at least the corresponding further modified code for the software application.

In addition, some implementations include one or more processors (e.g., central processing unit(s) (CPU(s)), graphics processing unit(s) (GPU(s), and/or tensor processing unit(s) (TPU(s)) of one or more computing devices, where the one or more processors are operable to execute instructions stored in associated memory, and where the instructions are configured to cause performance of any of the aforementioned methods. Some implementations also include one or more non-transitory computer readable storage media storing computer instructions executable by one or more processors to perform operations of any of the aforementioned methods. Some implementations also include a computer program product including instructions executable by one or more processors to perform operations of any of the aforementioned methods.

It should be appreciated that all combinations of the foregoing concepts and additional concepts described in greater detail herein are contemplated as being part of the subject matter disclosed herein. For example, all combinations of claimed subject matter appearing at the end of this disclosure are contemplated as being part of the subject matter disclosed herein.

The specification includes the following subject-matter expressed in the form of clauses 1-20.
1. A method implemented by one or more processors, the method comprising:
   receiving an indication of user input to generate a software application, the user input being received via a client device of a user;
   processing the user input to generate corresponding code for the software application, the corresponding code including basic capabilities that are determined based on the user input;
   causing a user interface to be rendered via a display of the client device of the user, the user interface including at least the corresponding code for the software application;
   receiving an indication of additional user input to modify the software application with generative model capabilities;
   processing the corresponding code for the software application to generate corresponding modified code for the software application, the corresponding modified code for the software application including the basic capabilities and the generative model capabilities; and
   causing the user interface, that is rendered via the display of the client device, to be updated, the user interface that is updated including at least the corresponding modified code for the software application.
2. The method of clause 1, wherein the additional user input to modify the software application with the generative model capabilities is natural language input that defines the generative model capabilities and that is received via the user interface.
3. The method of clause 2, wherein processing the corresponding code for the software application to generate the corresponding modified code for the software application comprises:
   determining, based on the additional user input, the generative model capabilities; and
   processing the corresponding code for the software application to add one or more application programming interface (API) calls to one or more generative models to generate the corresponding modified code for the software application, the one or more API calls that are added being based on the natural language input that defines the generative model capabilities.
4. The method of clause 3, wherein the natural language input does not define the one or more API calls or provide an API key to the GM for the one or more API calls.
5. The method of any of clauses 2-4, wherein processing the corresponding code for the software application to generate the corresponding modified code for the software application is in response to receiving the natural language input.
6. The method of any of clauses 1-5, wherein the additional user input to modify the software application with the generative model capabilities is a selection of a graphical element that, when selected, adds the generative model capabilities.
7. The method of clause 6, wherein processing the corresponding code for the software application to generate the corresponding modified code for the software application comprises:
   inferring the generative model capabilities to be added to the software application; and
   processing the corresponding code for the software application to add one or more application programming interface (API) calls to one or more generative models to generate the corresponding modified code for the software application, the one or more API calls that are added being based on the generative model capabilities that are inferred.
8. The method of clause 7, wherein the generative model capabilities to be added to the software application are inferred based on: a type of the software application, default generative model capabilities, an account type of an account of the user, or feedback from other users for a prior instance of the software application that was deployed or an additional software application that was deployed.
9. The method of clause 7 or 8, wherein processing the corresponding code for the software application to generate the corresponding modified code for the software application is in response to receiving the selection of the graphical element.
10. The method of any of clauses 7-9, wherein the selection of the graphical element does not define the API calls or provide an API key to the GM for the API calls.
11. The method of any of clauses 1-10, wherein the generative model capabilities comprise one or more of:
   text understanding capabilities;
   text generation capabilities;
   image and/or video understanding capabilities;
   image and/or video generation capabilities;
   audio understanding capabilities;
   audio generation capabilities; or
   an indication of one or more generative models that are available to implement one or more of the generative model capabilities.
12. The method of any of clauses 1-11, wherein the user interface enables the user to toggle between: the corresponding code for the software application or the corresponding modified code for the software application, and a preview of the software application.
13. The method of any of clauses 1-12, wherein the user interface is a dual-pane interface, wherein a first portion of the dual-pane interface includes a chat interface, and wherein a second portion of the dual-pane interface includes a visual interface.
14. The method of clause 13, wherein the additional user input to modify the software application with the generative model capabilities is natural language input that is received via the chat interface.
15. The method of clause 13 or 14, wherein the additional user input to modify the software application with the generative model capabilities is a selection of a graphical element that, when selected, adds the generative model capabilities and that is rendered via the visual interface.
16. The method of any of clauses 13-15, wherein the corresponding code for the software application is rendered via the visual interface in a visually streaming manner while it is being generated.
17. The method of any of clauses 13-16, wherein the user input is received via a singular chat interface that is rendered at the client device, and wherein the singular chat interface automatically transitions to the dual-pane interface in response to receiving the user input to generate the software application.
18. The method of any of clauses 13-17, wherein the user interface enables the user to toggle between: the corresponding code for the software application or the corresponding modified code for the software application, and a preview of the software application, and wherein the additional user input to modify the software application with the generative model capabilities is received via a selection of one or more graphical elements of the software application that are rendered as part of the preview of the software application.
19. A system comprising:
   at least one processor; and
   memory storing instructions that, when executed, cause the at least one processor to be operable to:
      receive an indication of user input to generate a software application, the user input being received via a client device of a user;
      process the user input to generate corresponding code for the software application, the corresponding code including basic capabilities that are determined based on the user input;
      cause a user interface to be rendered via a display of the client device of the user, the user interface including at least the corresponding code for the software application;
      receive an indication of additional user input to modify the software application with generative model capabilities;
      process the corresponding code for the software application to generate corresponding modified code for the software application, the corresponding modified code for the software application including the basic capabilities and the generative model capabilities; and
      cause the user interface, that is rendered via the display of the client device, to be updated, the user interface that is updated including at least the corresponding modified code for the software application.
20. A non-transitory computer-readable storage medium storing instructions that, when executed, cause at least one processor to perform operations to:
   receive an indication of user input to generate a software application, the user input being received via a client device of a user;
   process the user input to generate corresponding code for the software application, the corresponding code including basic capabilities that are determined based on the user input;
   cause a user interface to be rendered via a display of the client device of the user, the user interface including at least the corresponding code for the software application;
   receive an indication of additional user input to modify the software application with generative model capabilities;
   process the corresponding code for the software application to generate corresponding modified code for the software application, the corresponding modified code for the software application including the basic capabilities and the generative model capabilities; and
   cause the user interface, that is rendered via the display of the client device, to be updated, the user interface that is updated including at least the corresponding modified code for the software application.

## Claims

1. A method implemented by one or more processors, the method comprising:
receiving an indication of user input to generate a software application, the user input being received via a client device of a user;
processing the user input to generate corresponding code for the software application, the corresponding code including basic capabilities that are determined based on the user input;
causing a user interface to be rendered via a display of the client device of the user, the user interface including at least the corresponding code for the software application;
receiving an indication of additional user input to modify the software application with generative model capabilities;
processing the corresponding code for the software application to generate corresponding modified code for the software application, the corresponding modified code for the software application including the basic capabilities and the generative model capabilities; and
causing the user interface, that is rendered via the display of the client device, to be updated, the user interface that is updated including at least the corresponding modified code for the software application.

2. The method of claim 1, wherein the additional user input to modify the software application with the generative model capabilities is natural language input that defines the generative model capabilities and that is received via the user interface.

3. The method of claim 2, wherein processing the corresponding code for the software application to generate the corresponding modified code for the software application comprises:
determining, based on the additional user input, the generative model capabilities; and
processing the corresponding code for the software application to add one or more application programming interface (API) calls to one or more generative models to generate the corresponding modified code for the software application, the one or more API calls that are added being based on the natural language input that defines the generative model capabilities.

4. The method of claim 3, wherein the natural language input does not define the one or more API calls or provide an API key to the GM for the one or more API calls.

5. The method of any of claims 2-4, wherein processing the corresponding code for the software application to generate the corresponding modified code for the software application is in response to receiving the natural language input.

6. The method of any of claims 1-5, wherein the additional user input to modify the software application with the generative model capabilities is a selection of a graphical element that, when selected, adds the generative model capabilities.

7. The method of claim 6, wherein processing the corresponding code for the software application to generate the corresponding modified code for the software application comprises:
inferring the generative model capabilities to be added to the software application; and
processing the corresponding code for the software application to add one or more application programming interface (API) calls to one or more generative models to generate the corresponding modified code for the software application, the one or more API calls that are added being based on the generative model capabilities that are inferred.

8. The method of claim 7,
wherein the generative model capabilities to be added to the software application are inferred based on: a type of the software application, default generative model capabilities, an account type of an account of the user, or feedback from other users for a prior instance of the software application that was deployed or an additional software application that was deployed; and/or
wherein processing the corresponding code for the software application to generate the corresponding modified code for the software application is in response to receiving the selection of the graphical element; and/or
wherein the selection of the graphical element does not define the API calls or provide an API key to the GM for the API calls.

9. The method of any of claims 1-8, wherein the generative model capabilities comprise one or more of:
text understanding capabilities;
text generation capabilities;
image and/or video understanding capabilities;
image and/or video generation capabilities;
audio understanding capabilities;
audio generation capabilities; or
an indication of one or more generative models that are available to implement one or more of the generative model capabilities.

10. The method of any of claims 1-9, wherein the user interface enables the user to toggle between: the corresponding code for the software application or the corresponding modified code for the software application, and a preview of the software application.

11. The method of any of claims 1-10, wherein the user interface is a dual-pane interface, wherein a first portion of the dual-pane interface includes a chat interface, and wherein a second portion of the dual-pane interface includes a visual interface.

12. The method of claim 11,
wherein the additional user input to modify the software application with the generative model capabilities is natural language input that received via the chat interface; and/or
wherein the additional user input to modify the software application with the generative model capabilities is a selection of a graphical element that, when selected, adds the generative model capabilities and that is rendered via the visual interface.

13. The method of claim 11 or 12,
wherein the corresponding code for the software application is rendered via the visual interface in a visually streaming manner while it is being generated; and/or
wherein the user input is received via a singular chat interface that is rendered at the client device, and wherein the singular chat interface automatically transitions to the dual-pane interface in response to receiving the user input to generate the software application; and/or
wherein the user interface enables the user to toggle between: the corresponding code for the software application or the corresponding modified code for the software application, and a preview of the software application, and wherein the additional user input to modify the software application with the generative model capabilities is received via a selection of one or more graphical elements of the software application that are rendered as part of the preview of the software application.

14. A system comprising:
at least one processor; and
memory storing instructions that, when executed, cause the at least one processor to be operable to:
receive an indication of user input to generate a software application, the user input being received via a client device of a user;
process the user input to generate corresponding code for the software application, the corresponding code including basic capabilities that are determined based on the user input;
cause a user interface to be rendered via a display of the client device of the user, the user interface including at least the corresponding code for the software application;
receive an indication of additional user input to modify the software application with generative model capabilities;
process the corresponding code for the software application to generate corresponding modified code for the software application, the corresponding modified code for the software application including the basic capabilities and the generative model capabilities; and
cause the user interface, that is rendered via the display of the client device, to be updated, the user interface that is updated including at least the corresponding modified code for the software application.

15. A non-transitory computer-readable storage medium storing instructions that, when executed, cause at least one processor to perform operations to:
receive an indication of user input to generate a software application, the user input being received via a client device of a user;
process the user input to generate corresponding code for the software application, the corresponding code including basic capabilities that are determined based on the user input;
cause a user interface to be rendered via a display of the client device of the user, the user interface including at least the corresponding code for the software application;
receive an indication of additional user input to modify the software application with generative model capabilities;
process the corresponding code for the software application to generate corresponding modified code for the software application, the corresponding modified code for the software application including the basic capabilities and the generative model capabilities; and
cause the user interface, that is rendered via the display of the client device, to be updated, the user interface that is updated including at least the corresponding modified code for the software application.
